Europäisches Patentamt

European Patent Office

Office européen des brevets

(19)

(11) Veröffentlichungsnummer: **0 019 698**
**B1**

(12) **EUROPÄISCHE PATENTSCHRIFT**

(45) Veröffentlichungstag der Patentschrift:
**30.12.81**

(51) Int. Cl.³: **G 03 B 23/04**

(21) Anmeldenummer: **80101784.9**

(22) Anmeldetag: **03.04.80**

(54) **Diaprojektor.**

(30) Priorität: **12.04.79 DE 2914922**

(43) Veröffentlichungstag der Anmeldung:
**10.12.80 Patentblatt 80/25**

(45) Bekanntmachung des Hinweises auf die Patenterteilung:
**30.12.81 Patentblatt 81/52**

(84) Benannte Vertragsstaaten:
**BE CH FR GB IT LI SE**

(56) Entgegenhaltungen:
**DE-A-2 137 740**
**DE-B1-2 817 005**
**DE-B2-2 056 485**

(73) Patentinhaber: **AGFA-GEVAERT Aktiengesellschaft,
Camera-Werk Patent- und Lizenzwesen Postfach,
D-8000 München 90 (DE)**

(72) Erfinder: **Sylla, Jürgen, Amselweg 18,
D-8029 Sauerlach-Arget (DE)**

ACTORUM AG.

Diaprojektor

Die Erfindung betrifft einen Diaprojektor mit einer Bildbühne und einer Magazinführung zur Verwendung von Diamagazinen, in denen die Diarahmen der vorzuführenden Dias senkrecht zur Ein- und Ausschubrichtung bzw. zur Transportrichtung im Projektor getrennt voneinander durch ineinandergreifende Formschlusselemente von Magazin und Diarahmenkante formschlüssig gehalten sind.

Diamagazine und hierfür geeignete Diarahmen der genannten Art wurden bereits vorgeschlagen. Bei der Verwendung derartiger Magazine und der Vorführung von in derartigen Magazinen angeordneten Diarahmen ist es nicht möglich, seitenverkehrt in ein Magazin eingesetzte Diarahmen ohne Entnehmen des Magazins aus dem Projektor dem Magazin zu entnehmen und seitenrichtig einzusetzen.

Der Erfindung liegt daher die Aufgabe zugrunde, in einem Projektor der eingangs genannten Art eine wahlweise benutzbare Vorrichtung vorzusehen zur Verhinderung des normalerweise bei der Rückführung eines Diarahmens in das Magazin entstehenden Formschlusses zwischen Diarahmen und Magazin.

Diese Aufgabe wird erfindungsgemäss gelöst durch die Merkmale des Hauptanspruchs. Weitere vorteilhafte Merkmale nach der Erfindung sind den Unteransprüchen entnehmbar.

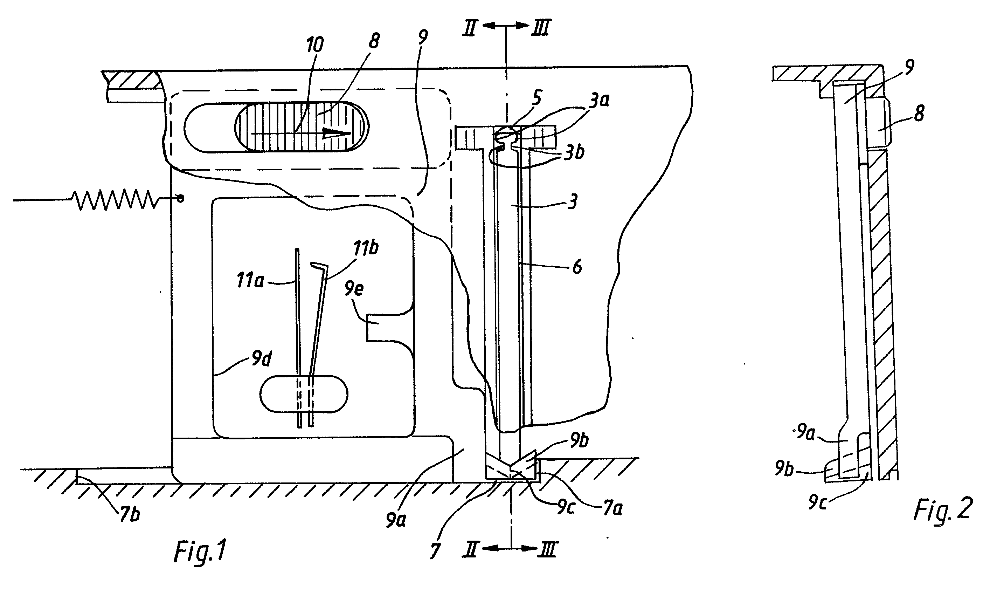

Die Erfindung wird anhand von Zeichnungen näher erläutert. Es zeigen
Fig. 1 eine Ansicht von Teilen eines erfindungsgemässen Diamagazinprojektors senkrecht zur Projektionsebene,
Fig. 2 einen Schnitt durch den Projektor nach Fig. 1 gemäss der Schnittlinie II–II,
Fig. 3 einen Schnitt durch den Projektor nach Fig. 1 gemäss der Schnittlinie III–III,
Fig. 4 einen Schnitt durch ein im Projektor nach Fig. 3 zu verwendendes Diamagazin gemäss der Schnittlinie IV–IV.

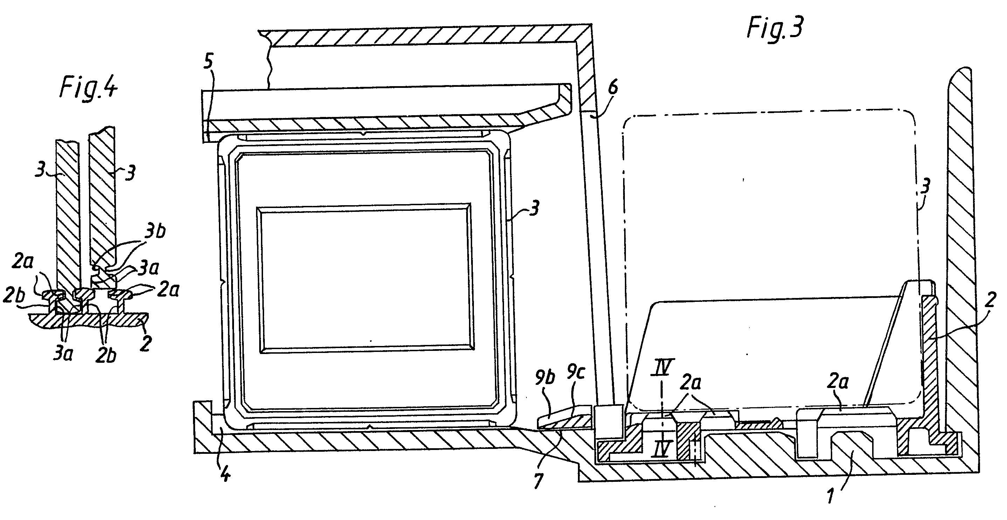

In Fig. 3 sind schematisch eine Magazinführung 1 eines Diaprojektors für ein Diamagazin 2, eine untere Prismenführung 4 und eine obere Prismenführung 5 für ein vorzuführendes, gerahmtes Dia 3 in der Bildbühne des Projektors und ein zwischen der Magazinführung 1 und der Bildbühne 4, 5 vorgesehener Spalt 6 zum Bewegen eines in der Ebene der Bildbühne im Magazin 2 liegenden Dias 3 in die Bildbühne 4, 5 mittels eines nicht gezeigten Diawechselschiebers dargestellt. Zwischen der Magazinführung 1 und der Bildbühne 4, 5 ist ausserdem eine Diaführungsbahn 7 vorgesehen.

Wie besonders Fig. 4 entnehmbar ist, handelt es sich um einen Diaprojektor zur Verwendung von Magazinen 2, in denen die einzelnen Diarahmen 3 getrennt und etwa flächenparallel zueinander senkrecht zu ihrer Einschubrichtung in das Magazin 2 formschlüssig gehalten werden durch ineinandergreifende Rippen 3a bzw. 2a und Nuten 3b bzw. 2b an Diarahmen und Magazin. Ist ein derartiges Magazin 2 mit Dias 3 in einen Projektor eingesetzt und stellt man beim Projizieren eines Dias fest, dass es seitenverkehrt in das Magazin eingesetzt war und deshalb seitenverkehrt in der Bildbühne 4, 5 liegt, so wird es seitenverkehrt in das Magazin zurücktransportiert. Um ein derartig seitenverkehrt eingesetztes Dia in seine richtige Lage drehen zu können, müsste als entweder das Magazin 2 dem Projektor entnommen werden und das Dia in Diaeinschubrichtung dem Magazin entnommen und gedreht wieder eingesetzt werden oder es müsste in der Bildbühne eine Vorrichtung zum Entnehmen und Drehen eines seitenverkehrt stehenden Dias vorgesehen werden.

Mit der vorliegenden Erfindung soll in einem Projektor für Magazine mit senkrecht zur Diaeinschubrichtung in diesen formschlüssig gehaltenen Diarahmen eine einfachere Lösung zum Drehen oder Wenden seitenverkehrt eingesetzter Dias 3 geschaffen werden. Sie besteht aus einem senkrecht zur Ebene eines Dias 3 in der Bildbühne 4, 5 zwischen Bildbühne und Magazin mittels einer Handhabe 8 verschiebbaren Schiebers 9 mit einem abstehenden Arm 9a, an dem freitragend eine Prismenführung 9b vorgesehen ist. Die Basis der Prismenführung 9b gleitet bei Verschiebung der Handhabe 8 und des Schiebers 9 auf der Diaführungsbahn 7 senkrecht zur Bewegungsrichtung eines Diarahmens 3. Der Scheitel 9c der Prismenführung 9b verläuft parallel zur Diaebene und ist gegenüber der Diaführungsbahn 7, von dieser neben der Bildbühne 4, 5 ausgehend, derart geneigt, dass er zusammen mit der Prismenführung 9b zum Magazin 2 hin so weit ansteigt, dass ein darauf gleitendes Dia nicht in die Nuten 2b des Magazins 2, sondern über dessen Rippen 2a geschoben wird. Wird somit durch Verschiebung der Handhabe 8 in Richtung des Pfeiles 10 der Schieber 9 bis zu einem Anschlag 7a seitlich der Diaführungsbahn 7 bewegt, so liegt seine schräge Prismenführung 9b, 9c im Bewegungsweg eines aus der Bildbühne 4, 5 zurück in das Magazin zu transportierenden Dias 3. Wird daher der Wechselschieber des Projektors zur Zurückbewegung eines Dias aus der Bildbühne in das Magazin betätigt, so schiebt er dieses Dia 3 über die schräge Prismenführung 9b, 9c auf die in dessen Führungsbahn liegenden Rippen 2a des Magazins 2. In dieser Lage muss die Betätigung des Wechselschiebers, gleich ob sie von Hand oder motorisch erfolgt, angehalten werden. Dann kann das seitenverkehrt auf den Rippen 2a stehende Dia (siehe das rechte Dia in Fig. 4) von oben dem Magazin 2 und Magazinschacht 1 entnommen und seitenrichtig wieder auf die Rippen 2a aufgesetzt werden. Nun muss das Magazin um einen Schaltschritt bzw. eine Fachbreite, um die es nach dem Herausbewegen des Dias aus der Bildbühne weitergeschaltet worden ist, von Hand zurückbewegt werden. Bei der nun folgenden Betätigung des Wechselschiebers in Richtung auf die Bildbühne wird dann das auf den Rippen 2a stehende Dia wieder in die Bildbühne 4, 5 geschoben. Anschliessend wird entweder mittels der Handhabe 8 oder durch Loslassen der Handhabe 8 unter Wirkung der Rückstellfeder 12 der Schieber 9 samt Prismenführung 9b, 9c entgegen der Richtung des Pfeiles 10 an seinen anderen Anschlag 7b bewegt, so dass die Prismenführung 9b, 9c wieder ausserhalb der Diaführungsbahn 7 liegt. Nach Betrachtung des nun seitenrichtig in der Bildbühne 4, 5 stehenden Dias 3 wird dieses bei erneuter Betätigung des Wechselschiebers zurück in das Magazin 2 und zwar mit seinen Rippen 3a in die Nuten 2b geschoben.

Bei Diaprojektoren mit durch Tastendruck auslösbarem motorischen Diawechsel muss sichergestellt sein, dass während des Umwechselns eines auf den Rippen 2a stehenden Dias 3 kein erneuter Diatransport ausgelöst werden kann. Daher weist der Schieber 9 eine Ausnehmung 9d auf, in der ein Schalter 11a, 11b für den Diatransportmotor liegt. Eine Kante der Ausnehmung 9d ist als Schaltarm 9e ausgebildet. Dieser gibt in der der in die Diaführungsbahn 7 eingeschobenen Stellung der Prismenführung 9b, 9c entsprechenden Stellung des Schiebers 9 den Schalter 11a, 11b frei, so dass letzterer geöffnet ist und somit während der Funktionsstellung der Prismenführung 9b, 9c alle Manipulationen von Hand ausgeführt werden müssen. Wird nach Beendigung einer Umstellung eines ursprünglich seitenverkehrt angeordneten Dias der Schieber 9 in seine Nichtgebrauchsstellung an den Anschlag 7b zurückgeschoben, so drückt der Schaltarm 9e den Schaltkontakt 11b an den Schaltkontakt 11a, so dass der Schalter 11a, 11b für weiteren motorischen Diatransport wieder geschlossen ist.

**Patentansprüche**

1. Diaprojektor mit einer Bildbühne und einer Magazinführung zur Verwendung von Diamagazinen, in denen die Diarahmen der vorzuführenden Dias senkrecht zur Ein- und Ausschubrichtung bzw. zur Transportrichtung im Projektor getrennt voneinander durch ineinandergreifende Formschlusselemente von Magazin und Diarahmenkanten formschlüssig gehalten sind, dadurch gekennzeichnet, dass in die Diarahmenführungsbahn (7) zwischen Bildbühne (4, 5) und Magazinführung (1) mittels einer Handhabe (8) eine Prismenführung (9, 9b, 9c) einschiebbar ist, deren Scheitel (9c) von der Ebene der Diarahmenführungsbahn (7) bis über die Höhe der magazinseitigen Formschlusselemente (2a) von der Bildbühne (4) zum Magazin (2) hin ansteigend ist und parallel zur Ebene eines in der Bildbühne (4, 5) befindlichen Diarahmens (3) verläuft, zur wahlweisen Verhinderung des Formschlusses zwischen Diarahmen und Magazin bei der Zurückführung des Diarahmens (3) in das Magazin (2).

2. Diaprojektor nach Anspruch 1, dadurch gekennzeichnet, dass die Prismenführung (9b, 9c) an einem senkrecht zur Transportrichtung eines Diarahmens (3) verschiebbaren Schieber (9) angeordnet ist.

3. Diaprojektor nach Anspruch 1 oder 2, dadurch gekennzeichnet, dass die Prismenführung (9, 9b, 9c) unter der Wirkung einer Feder (12) steht, die sie aus dem Transportweg des Diarahmens (3) zu ziehen sucht.

4. Diaprojektor nach einem der vorhergehenden Ansprüche, dadurch gekennzeichnet, dass Anschläge (7a, 7b) für die in den Diarahmentransportweg eingeschobene bzw. aus ihr herausgezogene Stellung der Prismenführung (9b, 9c) vorgesehen sind.

5. Diaprojektor nach einem der vorhergehenden Ansprüche, dadurch gekennzeichnet, dass im Bewegungsweg der Prismenführung bzw. des Schiebers (9, 9e) ein Schalter (11a, 11b) für einen Antriebsmotor einer automatischen oder halbautomatischen Diawechselvorrichtung angeordnet ist, der in der in die Diarahmenführungsbahn (7) eingeschobenen Stellung der Prismenführung (9b, 9c) durch die Prismenführung oder den Schieber (9e) geöffnet ist.

**Revendications**

1. Projecteur de diapositives comprenant un portecliché et un guide-magasin pour l'utilisation de magasinsclasseurs de diapositives, dans lesquels les cadres pour diapositives à projeter sont maintenus séparés les uns des autres perpendiculairement à la direction d'introduction et de sortie et à la direction d'entraînement par des éléments du magasin et par des bords des cadres pour diapositives coopérant par complémentarité de forme, caractérisé en ce que dans la glissière (7) de guidage des cadres pour diapositives entre le porte-cliché (4, 5) et le guide-magasin (1) peut être engagée, à l'aide d'un organe (8) de manœuvre, une pièce (9, 9b, 9c) prismatique de guidage, dont le sommet (9c) s'élève, du plan de la glissière (7) de guidage des cadres pour diapositives, vers le magasin (2) jusqu'à un niveau supérieur à celui des éléments (2a) de coopération par complémentarité de forme du porte-cliché (5) se trouvant du côté du magasin et s'étend parallèlement au plan d'un cadre (3) pour diapositives se trouvant dans le porte-cliché (4, 5) en vue d'empêcher toute coopérations éventuelle par complémentarité de forme entre les cadres pour diapositives et le magasin lors du retour du cadre (3) pour diapositives dans le magasin (2).

2. Projecteur de diapositives selon la revendication 1, caractérisé en ce que la pièce (9b, 9c) prismatique de guidage peut être placée sur un coulisseau (9) pouvant coulisser perpendiculairement à la direction d'entraînement d'un cadre (3) pour diapositives.

3. Projecteur de diapositives suivant la revendication 1 ou 2, caractérisé en ce que la pièce (9, 9b, 9c) prismatique de guidage est soumise à l'action d'un ressort (12) qui tend à la tirer hors du trajet d'entraînement du cadre (3) pour diapositives.

4. Projecteur de diapositives suivant l'une des revendications précédentes, caractérisé en ce qu'il est prévu des butées (7a, 7b) pour la pièce (9b, 9c) prismatique de guidage lorsqu'elle est engagée sur le trajet d'entraînement des cadres pour diapositives ou lorsqu'elle en est éloignée.

5. Projecteur de diapositives suivant l'une des revendications précédentes, caractérisé en ce que sur le trajet de déplacement de la pièce de guidage prismatique ou du coulisseau (9, 9e) est monté un interrupteur (11a, 11b) pour un moteur d'entraînement d'un dispositif automatique ou semi-automatique d'échange de diapositives, qui est ouvert par la pièce prismatique de guidage ou par le coulisseau (9e) lorsque la pièce (9b, 9c) prismatique de guidage est dans la position où elle est est engagée dans la glissière (7) de guidage des cadres pour diapositives.

**Claims**

1. A slide projector comprising a slide gate and a magazine guide for use with slide magazines in which the frames of the slides which are to be projected are maintained separately from one another perpendicular to the direction of slide feed and withdrawal or to the direction of slide transport in the projector by means of interengaging formations on the magazine and on the slide frame edges, characterised in that a V-shaped guide (9, 9b, 9c) is adapted to be inserted by means of a manual operating member (8) into the slide frame guide track (7) between the slide gate (4, 5) and the magazine guide (1), the apex (9c) of which guide rises from the slide gate (4) to the magazine (2) from the plane of the slide frame guide track (7) up to a point above the height of the engagement formations (2a) provided on the magazine and extends parallel to the plane of a slide frame (3) engaged in the slide gate (4, 5) for the optional prevention of positive engagement between the slide frame and magazine during the return of the slide frame (3) into the magazine (2).

2. A slide projector according to claim 1, characterised in that the V-shaped guide (9b, 9c) is arranged on a slider (9) which is slidable in a direction normal to the direction of transport of a slide frame (3).

3. A slide projector according to claim 1 or 2, characterised in that the V-shaped guide (9, 9b, 9c) is subject to the bias of a spring (12) which urges the guide out of the path of movement of the slide frame (3).

4. A slide projector according to any preceding claim characterised by the provision of end stops (7a, 7b) defining respectively the positions of the V-shaped guide (9b, 9c) in which the latter is inserted into and withdrawn from the path of movement of the slide frame.

5. A slide projector according to any preceding claim, characterised by the provision in the path of movement of the V-shaped guide or the slider (9, 9e) of a switch (11a, 11b) for a driving motor of an automatic or semi-automatic slide changer device, which switch is opened by the V-shaped guide or by the slider (9e) when the V-shaped guide (9b, 9c) is inserted into the slide frame guide track (7).

Fig.2

Fig.1

Fig.4

Fig.3

0 019 698